# EUROPEAN PATENT APPLICATION

(11) **EP 3 357 731 A1**
(43) Date of publication of application: **08.08.2018**
(21) Application number: 16851747.2
(22) Date of filing: 29.09.2016
(51) Int. Cl.: B60K 7/00, F16H 1/06

(54) **IN-WHEEL MOTOR DRIVE DEVICE**

(30) Priority: 30.09.2015 JP 2015193386; 27.09.2016 JP 2016188289
(71) Applicant: NTN Corporation, Osaka-shi, Osaka 550-0003 (JP)
(72) Inventor: SATO, Katsunori, Iwata-shi Shizuoka 438-8510 (JP)
(74) Representative: Bockhorni & Kollegen
(86) International application number: PCT/JP2016/078826
(87) International publication number: WO 2017/057576

(57) **Abstract**

An in-wheel motor driving device (10) includes: a wheel hub bearing portion (11) including a rotatable ring (12) adapted to rotate integrally with a wheel assembly, a fixed ring (13) placed coaxially with the rotatable ring, and a plurality of rolling members (14) placed in an annular-shaped gap between the rotatable ring and the fixed ring; a motor portion (21) adapted to drive the rotatable ring; a speed reduction portion (31) including an output shaft (36c) coaxially coupled to the rotatable ring, and an input gear (32) coupled to a motor rotational shaft (22) in the motor portion, the speed reduction portion being adapted to reduce a speed of a rotation of the motor rotational shaft (22) and to transmit the rotation to the rotatable ring; and an oil pump (53) placed coaxially with the wheel hub bearing portion and adapted to be driven by the output shaft.

## Description

### Technical Field

The present invention relates to oil pumps for in-wheel motor driving devices.

### Background Art

In-wheel motors necessitate oil pumps for supplying oils for lubricating and cooling, to motors, bearings and gears which are components. It is desirable that such oil pumps are incorporated in the insides of casings of in-wheel motors, in view of sealing of oil passages.

In cases where rotations of a motor are reduced, in speed, through a speed reducer with a higher speed reduction ratio for driving wheel assemblies, assuming that the speed reduction ratio is 10, and the rotating speed of the wheel assemblies is 1500 rpm, the motor rotating speed reaches 15000 rpm, which is a higher rotating speed. If an oil pump is driven by a motor rotational shaft rotating at such a higher rotating speed, this will cause vibrations, thereby degrading the durability of the oil pump.

In order to overcome the aforementioned problem, there has been conventionally known a structure described in Japanese Patent No. 4501911 (Patent Document 1), for example. Patent Document 1 describes an in-wheel motor structure including a motor, a vehicle wheel, a counter gear, and an oil pump placed concentrically inside the counter gear, wherein the oil pump is integrally coupled, at its rotational shaft, to a rotational shaft of the counter gear. The counter gear reduces the speed of the rotation of the motor and transmits the rotation at the reduced speed to the vehicle wheel. Therefore, the oil pump is rotated at lower speeds in comparison with cases where the oil pump is directly driven by the motor, which is advantageous in view of vibrations and the durability.

### Citation List

### Patent Literatures

Patent Document 1: Japanese Patent No. 4501911

### Summary of Invention

### Technical Problem

With the in-wheel motor according to Patent Document 1, the counter gear has not been sufficiently reduced in rotating speed, and there has been a room for improvement in view of rotating the oil pump at lower speeds.

Further, the in-wheel motor is mounted to a suspension device in a vehicle. Therefore, if the in-wheel motor has an increased weight, this will increase the unspringing load in the vehicle. Such an increase of the unspringing load will degrade the comfortability of the ride on the vehicle. Therefore, it is desirable to make the in-wheel motor have a smaller weight. Further, in order to prevent the in-wheel motor from interfering with the vehicle body and the suspension device in the state where it is mounted to the vehicle, it is desirable to make the in-wheel motor have a smaller size in the direction of an axis line.

In view of the aforementioned circumstance, it is an object of the present invention to provide a structure capable of reducing the rotating speed of an oil pump and, further, capable of making an in-wheel motor have a smaller size and a smaller weight.

### Solution to Problem

For attaining the aforementioned object, an in-wheel motor driving device according to the present invention includes: a wheel hub bearing portion including a rotatable ring adapted to rotate integrally with a wheel assembly, a fixed ring placed coaxially with the rotatable ring, and a plurality of rolling members placed in an annular-shaped gap between the rotatable ring and the fixed ring; a motor portion adapted to drive the rotatable ring; a speed reduction portion including an output shaft coaxially coupled to the rotatable ring, and an input gear coupled to a motor rotational shaft in the motor portion, the speed reduction portion being adapted to reduce a speed of a rotation of the motor rotational shaft and to transmit the rotation to the rotatable ring; and an oil pump placed coaxially with the wheel hub bearing portion and adapted to be driven by the output shaft.

According to the present invention, the oil pump is placed coaxially with the wheel hub bearing portion and is driven by the output shaft, which enables driving the oil pump at the same rotating speed as that of the wheel assembly. Thus, the oil pump is rotated at lower speeds, which prevents occurrences of problems of vibrations, thereby improving the durability. Further, the rotatable ring and the fixed ring correspond to an outer ring and an inner ring in a rolling bearing. The oil pump can be any one to which the rotating speed of the output shaft can be inputted. The transmission of the rotation from the output shaft to the oil pump can be performed either directly or indirectly, and is not particularly limited. For example, the oil pump can either be coupled to an end portion of the output shaft, be engaged with an outer peripheral surface of the output shaft or be coupled or engaged with the rotatable ring.

As an embodiment of the present invention, the rotatable ring comprises an outer ring, and the fixed ring comprises an inner ring placed in a center hole in the outer ring, and the oil pump is provided on an outer periphery of the outer ring. According to this embodiment, the oil pump is provided on the outer periphery of the outer ring, which enables placing the oil pump such that its position in the direction of the axis line overlaps with the wheel hub bearing portion. This prevents the wheel hub bearing portion from having a larger size in the direction of the axis line, which enables housing the entire wheel hub bearing portion within the interior hollow area within the vehicle wheel. Further, the outer ring, out of the outer ring and the inner ring which are components of the wheel hub bearing portion, is rotated, which enables placing the speed reduction portion and the motor in such a way as to displace them from the axis line of the wheel hub bearing portion. This enables making the speed reduction portion have a larger number of stages and a higher speed reduction ratio and making the motor have a smaller size and a smaller weight, which enables making the in-wheel motor driving device have a smaller size and a smaller weight.

As a preferable embodiment of the present invention, the outer ring includes a coupling portion to be coupled to the wheel assembly at its one side in a direction of an axis line, and the oil pump is placed between the coupling portion and an output gear. According to this embodiment, the oil pump is placed between the coupling portion and the output gear, which enables effectively utilizing the space between the coupling portion and the output gear.

As another embodiment, the outer ring includes a coupling portion to be coupled to the wheel assembly at its one side in a direction of an axis line, and the oil pump is placed in the other side in the direction of the axis line, which is an opposite side from the coupling portion with respect to the output gear. According to this embodiment, it is possible to effectively utilize the space formed between the speed reduction portion and the outer periphery of the other-side end portion of the outer ring in the direction of the axis line. Further, it is possible to overlap the position of the speed reduction portion in the direction of the axis line with the oil pump, which enables making the in-wheel motor driving device have a smaller size in the direction of the axis line.

As an embodiment of the present invention, the oil pump includes an inner rotor and an outer rotor, and the inner rotor is engaged, at its inner peripheral surface, with an outer peripheral surface of the outer ring. According to this embodiment, it is possible to employ a trochoid pump, a cycloid pump or an involute gear pump, as the oil pump. Also, as another embodiment, pumps of other types can be employed as the oil pump.

As an embodiment of the present invention, the output gear is coaxially provided, in its end surface, with a concave portion with an annular shape, and the oil pump is provided in the concave portion. According to this embodiment, even though the oil pump is provided in the wheel hub bearing portion, it is possible to make the wheel hub bearing portion have a smaller size in the direction of the axis line. As an example, the output gear can be protruded at its outer peripheral portion toward one side in the direction of the axis line with respect to its radially-middle portion, and its radially-middle portion can be formed to have a smaller thickness, which forms an annular-shaped concave portion in the radially-middle portion of the output gear. Further, the oil pump can be provided in the concave portion in the output gear.

As an embodiment of the present invention, the outer ring is provided, in its outer peripheral surface, with a spline groove with a constant outer diameter from its one side in the direction of the axis line to its other side in the direction of the axis line. An inner peripheral surface of the output gear and the inner peripheral surface of the inner rotor are fitted to the spline groove. According to this embodiment, the outer ring is provided with no annular-shaped level difference in its outer periphery, and the output gear and the inner rotor can be fitted to the outer ring using the common spline groove, which improves the assembling efficiency. Further, this eliminates the necessity of making the outer ring have a smaller thickness and a smaller diameter, in order to fit the inner rotor to the outer ring. This can prevent reduction of the strength of the outer ring.

As another embodiment of the present invention, the fixed ring comprises an outer ring, and the rotatable ring comprises an inner ring placed in a center hole in the outer ring. Thus, the present invention can be realized either by the wheel hub bearing portion adapted to rotate the outer ring while fixing the inner ring which has been described above or by the wheel hub bearing portion adapted to rotate the inner ring while fixing the outer ring. Further, the inner ring is not limited to an annular shape. The inner ring can be also constituted by a solid shaft member.

As an embodiment, the oil pump is engaged with or coupled to the output shaft. According to this embodiment, it is possible to place the oil pump adjacent to the elongated thin output shaft, thereby increasing the degree of freedom of the layout of the oil pump.

### Advantageous Effects of Invention

As described above, according to the present invention, the oil pump is driven by rotations at sufficiently-reduced speeds, which can reduce the vibration of the oil pump in comparison with conventional structures, thereby improving the durability. Further, it is possible to make the in-wheel motor have a reduced size and a reduced weight.

### Brief Description of Drawings

Fig. 1 is a longitudinal cross-sectional view illustrating an in-wheel motor driving device according to an embodiment of the present invention.
Fig. 2 is a side view schematically illustrating the same embodiment.
Fig. 3 is a schematic view illustrating an oil pump extracted therefrom.
Fig. 4 is a longitudinal cross-sectional view illustrating an in-wheel motor driving device according to a further embodiment of the present invention.
Fig. 5 is a longitudinal cross-sectional view illustrating an in-wheel motor driving device according to a yet further embodiment of the present invention.

### Description of Embodiments

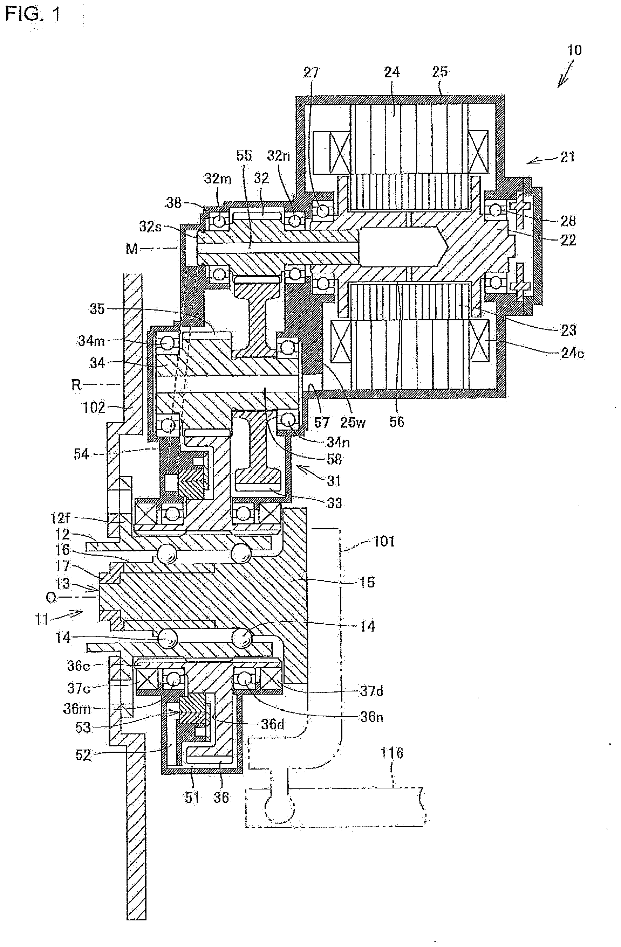

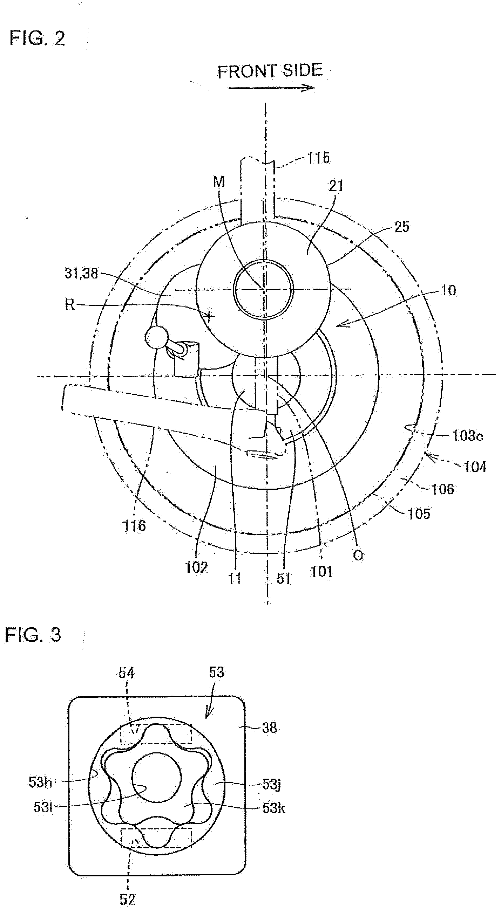

Hereinafter, an embodiment of the present invention will be described, in detail, with reference to the drawings. Fig. 1 is a longitudinal cross-sectional view illustrating an in-wheel motor driving device according to an embodiment of the present invention. Fig. 2 is a side view schematically illustrating the same embodiment, illustrating a state where the in-wheel motor driving device is viewed in the direction of an axis line of the in-wheel motor driving device. In Fig. 1, the left side of the paper plane is assumed to be an outer side in the vehicle-widthwise direction, while the right side of the paper plane is assumed to be an inner side in the vehicle-widthwise direction. In Figs. 1 and 2, the upper side of the paper plane is assumed to be an upper side of the vehicle, while the lower side of the paper plane is assumed to be a lower side of the vehicle. An in-wheel motor driving device 10 includes a wheel hub bearing portion 11 provided at the center of a wheel assembly which is not illustrated, a motor portion 21 for driving the wheel assembly, and a speed reduction portion 31 for reducing the speed of the rotation of the motor portion and for transmitting the rotation at the reduced speed to the wheel hub bearing portion 11. The motor portion 21 and the speed reduction portion 31 are placed in such a way as to be displaced from the axis line O of the wheel hub bearing portion 11. The axis line O extends in the vehicle-widthwise direction.

As illustrated in Fig. 1, the wheel hub bearing portion 11 has a rotatable outer ring and a fixed inner ring and includes an outer ring 12 as a wheel hub coupled to a vehicle wheel which is not illustrated, an inner fixed member 13 placed on the inner periphery of the outer ring 12, and plural rolling members 14 placed in an annular-shaped gap between the outer ring 12 and the inner fixed member 13. The inner fixed member 13 includes a non-rotatable fixed shaft 15, an inner race 16, and a pull-out preventing nut 17. The fixed shaft 15 extends along the direction of the axis line O and is formed to have a smaller diameter at its one side in the direction of the axis line O and has a larger diameter at its other side in the direction of the axis line O. Further, the fixed shaft 15 is directed inwardly in the vehicle-widthwise direction and is attached to a carrier 101, at its other side in the direction of the axis line O. Further, the fixed shaft 15 is directed outwardly in the vehicle-widthwise direction at its one side in the direction of the axis line O, and the inner race 16 with an annular shape is fitted to the outer periphery thereof. Further, the pull-out preventing nut 17 is screwed on one-side end of the fixed shaft 15 in the direction of the axis line O, thereby preventing the inner race 16 from being pulled out therefrom. In the following description, "one side in the direction of the axis line O" will designate an outer side in the vehicle-widthwise direction, while "the other side in the direction of the axis line O" will designate an inner side in the vehicle-widthwise direction. The carrier 101 is coupled to a suspension member 116.

The rolling members 14 are placed in two or more rows in such a way as to be spaced apart from each other in the direction of the axis line O. The outer diameter surface of the inner race 16 forms an inner raceway surface for the rolling members 14 in the first row and is faced to the inner-diameter surface of the outer ring 12 in its one side in the direction of the axis line O. On the other hand, the outer periphery of the fixed shaft 15 in its middle portion in the direction of the axis line O forms an inner raceway surface for the rolling members 14 in the second row and is faced to the inner-diameter surface of the outer ring 12 in its other side in the direction of the axis line O.

The outer ring 12 is provided with a coupling portion 12f at its one-side end in the direction of the axis line O. The coupling portion 12f is constituted by a flange and forms a coupling portion to be coaxially coupled to a brake rotor 102 and the wheel assembly which is not illustrated. The outer ring 12 is coupled to the wheel assembly at the coupling portion 12f and is rotated integrally with the wheel assembly.

The motor portion 21 includes a motor rotational shaft 22, a rotor 23, a stator 24 and a motor casing 25, which are placed in the mentioned order from an axis line M of the motor portion 21 toward the outer diameter side thereof. The motor portion 21 is constituted by a radial gap motor of an inner-rotor/outer-stator type, but can be also of other types. For example, although not illustrated, the motor portion 21 can be also of an axial gap type.

The axis line M which forms the rotational center of the motor rotational shaft 22 and the rotor 23 extends in parallel with the axis line O of the wheel hub bearing portion 11. That is to say, the motor portion 21 is placed in such a way as to be displaced from the axis line O of the wheel hub bearing portion 11, in such a way as to be spaced apart therefrom. Further, the position of the motor portion 21 in the direction of the axis line overlaps with the inner fixed member 13 in the wheel hub bearing portion 11, as illustrated in Fig. 1. This enables the in-wheel motor driving device 10 to have a smaller size in the direction of the axis line. The motor rotational shaft 22 is rotatably supported at its opposite ends portions on the motor casing 25, with rolling bearings 27 and 28 interposed therebetween. The motor casing 25, which has a substantially cylindrical shape, is integrally coupled to a main body casing 38 at its one-side end in the direction of the axis line M and is sealed at its other-side end in the direction of the axis line M. The motor portion 21 drives the outer ring 12.

The speed reduction portion 31 is constituted by a parallel-shaft gear speed reducer with three axes and includes an output gear 36 provided coaxially on the outer peripheral surface of the outer ring 12, an input gear 32 coaxially coupled to the motor rotational shaft 22 in the motor portion 21, two or more intermediate gears 33 and 35 for transmitting the rotation from the input gear 32 to the output gear 36, and the main body casing 38 for housing these gears.

The input gear 32 is constituted by an external gear with a smaller diameter and is constituted by a plurality of teeth formed on the outer periphery of a shaft portion 32s placed along the axis line M, at its one-side end portion in the direction of the axis line. The outer periphery of the shaft portion 32s at its other-side end portion in the direction of the axis line is inserted in a center hole formed in the one-side end portion of the motor rotational shaft 22 in the direction of the axis line and is fitted thereto unrotatably with respect thereto. The shaft portion 32s is rotatably supported, near the opposite end portions of the input gear 32, on the main body casing 38, with rolling bearings 32m and 32n interposed therebetween. The main body casing 38 covers the speed reduction portion 31 and the wheel hub bearing portion 11 in such a way as to surround the axis lines O, M and R extending in parallel with each other and, further, covers the opposite sides of the speed reduction portion 31 in the direction of the axis line. The shaft portion 32s forms an input shaft in the speed reduction portion 31. The main body casing 38 is faced to the brake rotor 102, at its one-side end surface in the direction of the axis line. The main body casing 38 is coupled to the motor casing 25, at its other-side end surface in the direction of the axis line. The motor casing 25 is attached to the main body casing 38 and is protruded from the main body casing 38 toward the other side in the direction of the axis line. The main body casing 38 houses all the rotational elements (the shafts and the gears) in the speed reduction portion 31.

The main body casing 38 is coupled to a suspension member 115, above the carrier 101. That is to say, the in-wheel motor driving device 10 is mounted to a suspension device in an electric vehicle, at the two portions, which are the main body casing 38 and the carrier 101.

The input gear 32 with a smaller diameter engages with the first intermediate gear 33 which forms an external gear with a larger diameter. The intermediate gear 33 is coaxially coupled to the second intermediate gear 35 which forms an external gear with a smaller diameter, through an intermediate shaft 34. The intermediate shaft 34 is rotatably supported at its opposite end portions on the main body casing 38, with rolling bearings 34m and 34n interposed therebetween. The first intermediate gear 33 and the second intermediate gear 35 are placed between the rolling bearing 34m and the rolling bearing 34n and are adjacent to each other. In the present embodiment, the first intermediate gear 33 and the intermediate shaft 34 are formed integrally with each other, and the second intermediate gear 35 is fitted to the outer periphery of the intermediate shaft 34 unrotatably with respect thereto. An axis line R passing through the center of the intermediate shaft 34 extends in parallel with the axis line O of the wheel hub bearing portion 11. Thus, the speed reduction portion 31 is placed in such a way as to be displaced from the wheel hub bearing portion 11. The second intermediate gear 35 with a smaller diameter engages with the output gear 36 with a larger diameter. The positional relationship between the axis lines O, R and M is as illustrated in Fig. 2. The speed reduction portion 31 is constituted by a parallel three-shaft type gear speed reducer having the axis lines O, R and M extending in parallel with each other.

The output gear 36 is constituted by an external gear, and the outer ring 12 is fitted to a center hole in the output gear 36, unrotatably with respect thereto. This fitting is spline fitting or serration fitting. The output gear 36 has larger diameters at its tooth top and at its tooth bottom than that of the outer peripheral surface of the outer ring 12. Further, the outer peripheral portion of the output gear 36 and the outer peripheral portion of the first intermediate gear 33 overlap with each other, when viewed in the direction of the axis line O. The output gear 36 is provided with a tubular portion 36c at its center. The opposite end portions of the tubular portion 36c protrude from the opposite end surfaces of the output gear 36 and are rotatably supported on the main body casing 38, with rolling bearings 36m and 36n interposed therebetween. The tubular portion 36c fitted to the outer ring 12 forms an output shaft in the speed reduction portion 31.

The main body casing 38 is provided, at its opposite ends in the direction of the axis line, with respective openings for penetrating the outer ring 12 therethrough. In the respective openings, there are provided sealing members 37c and 37d for sealing an annular-shaped gap between the main body casing 38 and the outer ring 12. Thus, the outer ring 12 which forms a rotatable member is covered with the main body casing 38, except its one-side end in the direction of the axis line O. In other words, the wheel hub bearing portion 11 is housed within the main body casing 38, except its opposite end portions. Further, the main body casing 38 is installed in such a way as to straddle the three axis lines O, R and M which are parallel with each other.

As illustrated in Fig. 1, the first intermediate gear 33, the second intermediate gear 35 and the intermediate shaft 34 are placed closer to the outer-diameter side, than the outer ring 12. Further, the first intermediate gear 33, the second intermediate gear 35 and the intermediate shaft 34 are placed in such a way as to overlap with the position of the outer ring 12 in the direction of the axis line O. The same applies to the input gear 32 and the output gear 36. In the present embodiment, the entire first intermediate gear 33 and the entire second intermediate gear 35 are placed closer to the outer-diameter side than the outer ring 12. Also, as an example of modification which is not illustrated, the intermediate shaft 34 can be made to have a larger length, further the first intermediate gear 33 with a larger diameter can be spaced apart from the second intermediate gear 35 with a smaller diameter, and the first intermediate gear 33 can be placed such that its outer periphery overlaps with the outer ring 12 when viewed in the direction of the axis line O.

Returning the description to the present embodiment, as illustrated in Fig. 1, the output gear 36 is placed in an area in the direction of the axis line between the position, in the direction of the axis line, of the centers of the rolling members 14 placed in the row closest to the one side in the direction of the axis line O and the position, in the direction of the axis line, of the centers of the rolling members 14 placed in the row closest to the other side in the direction of the axis line O. Thus, the outer ring 12 is stably supported by the rolling members 14 and 14 in the two or more rows during driving of the wheel assembly.

As illustrated in Fig. 2, the wheel hub bearing portion 11 and the speed reduction portion 31 are placed within a circle 103c having the same diameter as the rim inner diameter of the vehicle wheel coupled to the outer ring 12. More specifically, the output gear 36 is placed within the circle 103c. Thus, the wheel hub bearing portion 11, the speed reduction portion 31 and the motor portion 21 can be all housed in the vehicle wheel.

Furthermore, the motor portion 21 is placed more internally in the vehicle widthwise direction, than the vehicle wheel, thereby being prevented from interfering with the wheel assembly 104. The wheel assembly 104 is of a well-known type having a vehicle wheel 105, and a tire 106 fitted to the outer periphery of the vehicle wheel 105. The wheel assembly 104 is coaxially coupled to the wheel hub bearing portion 11 and has the common axis line O.

The axis line R of the speed reduction portion 31 is placed above the axis line O. The axis line M of the motor portion 21 is placed above the axis line R. This makes it easier to secure a clearance from the road surface to the speed reduction portion 31, and a clearance from the road surface to the motor portion 21.

Next, there will be described a lubricating oil passage in the in-wheel motor driving device.

In the present embodiment, as a lubricating oil passage, there are provided an oil reservoir 51, a suction oil passage 52, an oil pump 53, a discharge oil passage 54, an input-shaft oil passage 55, a rotor oil passage 56, a through hole 57, and an intermediate-shaft oil passage 58, which are connected to each other in the mentioned order. The oil reservoir 51 is constituted by an inner space within the main body casing 38 and occupies a lower portion of the in-wheel motor driving device 1. The lubricating oil accumulated in the oil reservoir 51 lubricates the outer periphery of the output gear 36 by being scooped up thereby.

The oil pump 53 is placed coaxially on the outer periphery of the outer ring 12. Fig. 3 is a view illustrating the oil pump 53 extracted therefrom, in a state of being viewed in the direction of the axis line. The oil pump 53 is constituted by a trochoid pump having an outer rotor 53j and an inner rotor 53k. The outer rotor 53j is housed in a circular-shaped room 53h formed in the main body casing 38. The outer ring 12 (Fig. 1) is inserted in a center hole 531 in the inner rotor 53k, and the inner rotor 53k is engaged at its inner peripheral surface with the outer peripheral surface of the outer ring 12, so that both of them are rotated integrally with each other.

As illustrated in Fig. 1, the oil pump 53 is placed between the coupling portion 12f and the output gear 36. The output gear 36 is formed to have a larger thickness in the direction of axis line O at its outer peripheral portion having its tooth top and its tooth bottom and to have a smaller thickness in the direction of the axis line O at its radially-intermediate portion coupling its center portion and its outer peripheral portion to each other. Further, the outer peripheral portion thereof is formed to protrude toward the one side in the direction of the axis line O from the radially-intermediate portion thereof. Therefore, the output gear 36 is provided with an annular-shaped concave portion 36d in its one-side end surface in the direction of the axis line O. The oil pump 53 is provided in the concave portion 36d. Thus, even though the oil pump 53 is provided on the outer ring 12, the wheel hub bearing portion 11 is prevented from having a larger size in the direction of the axis line O. Further, the inner rotor in the oil pump 53 is fitted to the center portion of the output gear 36. However, the inner rotor can be also fitted to the outer periphery of the outer ring 12 as an example of modification which is not illustrated.

The suction oil passage 52 and the discharge oil passage 54 are formed inside the wall thickness of the main body casing 38 in its one side in the direction of the axis line. The suction oil passage 52 extends in the vertical direction and is connected at its lower end to the oil reservoir 51 and is connected at its upper end to a suction port of the oil pump 53. The discharge oil passage 54 extends in the vertical direction and is connected at its lower end to a discharge port of the oil pump 53 and is connected at its upper end to one-side end of the input-shaft oil passage 55 in the direction of the axis line.

The input-shaft oil passage 55 is constituted by a center hole in the shaft portion 32s and extends along the axis line M. The input-shaft oil passage 55 is connected, at its other-side end in the direction of the axis line, to an inner-diameter-side end of the rotor oil passage 56. The rotor oil passage 56 extends in the outer-diameter direction from the inside of the motor rotational shaft 22 up to the rotor 23. The rotor oil passage 56 is faced, at its outer-diameter-side end, to a stator coil 24c in the stator 24.

The through hole 57 is provided at a lower portion of the motor portion 21 and penetrates through a partition wall 25w forming a partition between the internal space inside the motor casing 25 and the internal space inside the main body casing 38. The through hole 57 is connected, at its one side, to the inside of the motor casing 25 at the same height as the bottom surface thereof. The through hole 57 is faced, at its other side, to an end portion of the intermediate-shaft oil passage 58. The intermediate-shaft oil passage 58 is formed in the intermediate shaft 34 and extends along the axis line R.

There will be described effects of the lubricating oil passage.

While the oil pump 53 is driven through the rotation of the outer ring 12, the lubricating oil is sucked from the oil reservoir 51 into the oil pump 53 through the suction oil passage 52. Next, the lubricating oil is discharged from the oil pump 53 and is supplied to the motor portion 21 through the discharge oil passage 54 and the input-shaft oil passage 55. Further, the lubricating oil accumulated in the oil reservoir 51 and the lubricating oil flowing through the suction oil passage 52 and the discharge oil passage 54 are cooled in the main body casing 38.

Next, the lubricating oil flows through the rotor oil passage 56 and is ejected to the stator coil 24c to cool the motor portion 21. Next, the lubricating oil drops along the inner peripheral surface of the motor casing 25 and is supplied to the speed reduction portion 31 through the through hole 57 to lubricate the respective rotational elements (the shafts, the gears and the rolling bearings). Further, the lubricating oil is stored in the lower portion of the main body casing 38, namely in the oil reservoir 51. Also, the lubricating oil flows from the through hole 57 through the intermediate-shaft oil passage 58 and, next, lubricates the respective rotational elements (the shafts, the gears and the rolling bearings). Then, the lubricating oil is stored in the oil reservoir 51. Next, the lubricating oil is sucked into the oil pump 53, again, and is circulated within the in-wheel motor driving device 10.

According to the present embodiment, the oil pump 53 is placed coaxially with the outer ring 12 and is driven by the outer ring 12, which enables driving the oil pump 53 at the same rotating speed (1500 rpm or less) as that of the wheel assembly. Thus, the oil pump 53 is rotated at lower speeds, which prevents occurrences of problems of vibrations, thereby improving the durability.

Further, according to the present embodiment, the output gear 36 is coaxially provided on the outer peripheral surface of the outer ring 12, which enables placing the speed reduction portion 31 in such a way as to displace it from the wheel hub bearing portion 11, thereby realizing a multi-stage multi-axis parallel shaft type gear speed reducer. This enables increasing the rotating speed of the motor portion 21 and reducing the size and the weight of the motor portion 21, thereby reducing the size and the weight of the in-wheel motor driving device 10.

Further, according to the present embodiment, the oil pump 53 is provided on the outer periphery of the outer ring 12, which enables placing the oil pump 53 such that its position in the direction of the axis line overlaps with the wheel hub bearing portion 11. This prevents the wheel hub bearing portion 11 from having a larger size in the direction of the axis line, which enables housing the entire wheel hub bearing portion 11 within the interior hollow area within the vehicle wheel.

Further, according to the present embodiment, the outer ring 12 includes the coupling portion 12f to be coupled to the wheel assembly at its one side in the direction of the axis line, and the oil pump 53 is placed between the coupling portion 12f and the output gear 36, which enables effectively utilizing the space between the coupling portion 12f and the output gear 36.

Further, according to the present embodiment, the oil pump 53 includes the outer rotor 53j and the inner rotor 53k (Fig. 3), and the inner peripheral surface of the center hole 531 in the inner rotor 53k is engaged with the outer peripheral surface of the outer ring 12. This enables using a trochoid pump, a cycloid pump or an involute gear pump, as the oil pump 53.

Further, according to the present embodiment, the output gear 36 is coaxially provided with the concave portion 36d with an annular shape, in its one-side end surface in the direction of the axis line O. Further, the oil pump 53 is provided in the concave portion 36d. This prevents the wheel hub bearing portion 11 from having a larger size in the direction of the axis line O, even though the oil pump 53 is provided in the wheel hub bearing portion 11.

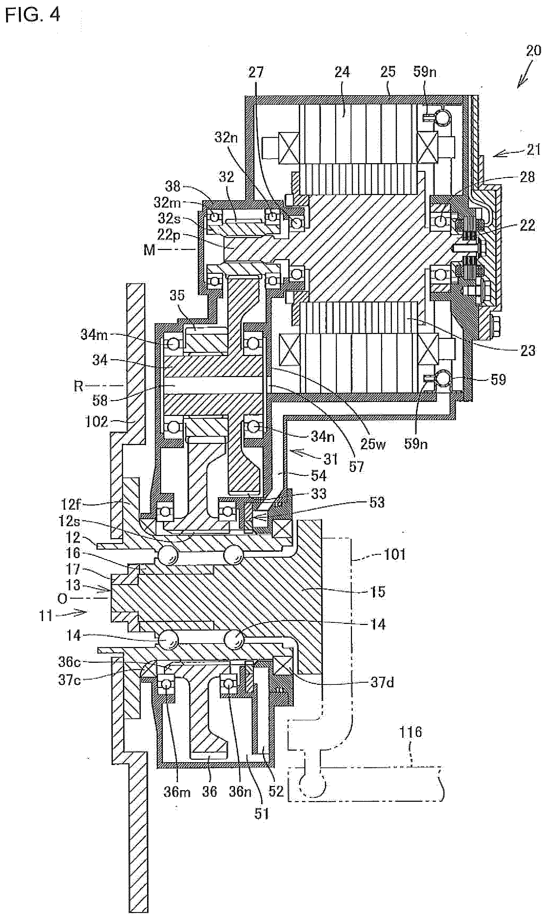

Next, a further embodiment of the present invention will be described. Fig. 4 is a longitudinal cross-sectional view illustrating the further embodiment of the present invention. In the further embodiment, the structures common to this further embodiment and the aforementioned embodiment will be designated by the same reference signs and will not be described redundantly, and only different structures will be described hereinafter. In the further embodiment, an oil pump 53 is placed in the other side in the direction of an axis line O, which is the opposite side from a coupling portion 12f with respect to an output gear 36. A first intermediate gear 33 is placed closer to the outer- diameter side than an outer ring 12 in such a way as to overlap with the position of the outer ring 12 in the direction of the axis line, so that a space is formed between the first intermediate gear 33 and the outer ring 12. The oil pump 53 is placed in this space.

The outer ring 12 is provided, in its outer periphery, with spline grooves 12s with a constant outer diameter, from its one side to its other side in the direction of the axis line. The spline grooves 12s are fitted, at its one side in the direction of the axis line, to spline grooves formed in the inner peripheral surface of the output gear 36 and, further, are fitted, at its other side in the direction of the axis line, to spline grooves formed in the inner peripheral surface of a center hole 531 in an inner rotor 53k.

In the further embodiment, a lubricating oil passage includes a stator oil passage 59, instead of the aforementioned rotor oil passage. The stator oil passage 59 is a duct passage which is installed inside a motor casing 25 and extends in an annular shape along an end surface of a stator 24. The stator oil passage 59 is connected to an upper end of a discharge oil passage 54. The stator oil passage 59 is provided with plural nozzles 59n directed toward the end surface of the stator 24 such that these nozzles 59n are spaced apart from each other. A lubricating oil is supplied through the discharge oil passage 54 to a motor portion 21 and, further, is ejected through the nozzles 59n to the stator 24 to cool the stator 24. Next, the lubricating oil drops along the inner peripheral surface of the motor casing 25, then is discharged through a through hole 57 and is supplied from the motor portion 21 to a speed reduction portion 31.

A motor rotational shaft 22 is provided with a protruding portion 22p, at its one-side end in the direction of the axis line O. The protruding portion 22p extends along an axis line M and is inserted in a center hole in a shaft portion 32s. Thus, an input gear 32 is coaxially coupled to the motor rotational shaft 22.

In the further embodiment, the outer ring 12 includes the coupling portion 12f to be coupled to the wheel assembly at its one side in the direction of the axis line O, and the oil pump 53 is placed in the other side in the direction of the axis line O, which is the opposite side from the coupling portion 12f with respect to the output gear 36. This enables effectively utilizing the space between the first intermediate gear 33 and the outer ring 12. Further, the position of the first intermediate gear 33 in the direction of the axis line can be overlapped with the oil pump 53, which can make an in-wheel motor driving device 20 have a smaller size in the direction of the axis line.

Further, according to the further embodiment, the outer ring 12 is provided with no annular-shaped level difference in its outer periphery, and the output gear 36 and the inner rotor 53k can be fitted to the outer ring 12 using the common spline grooves 12s, which improves the assembling efficiency. Further, this eliminates the necessity of making the outer ring 12 have a smaller thickness and a smaller diameter, in order to fit the inner rotor 53k to the outer ring 12. This can prevent reduction of the strength of the outer ring 12.

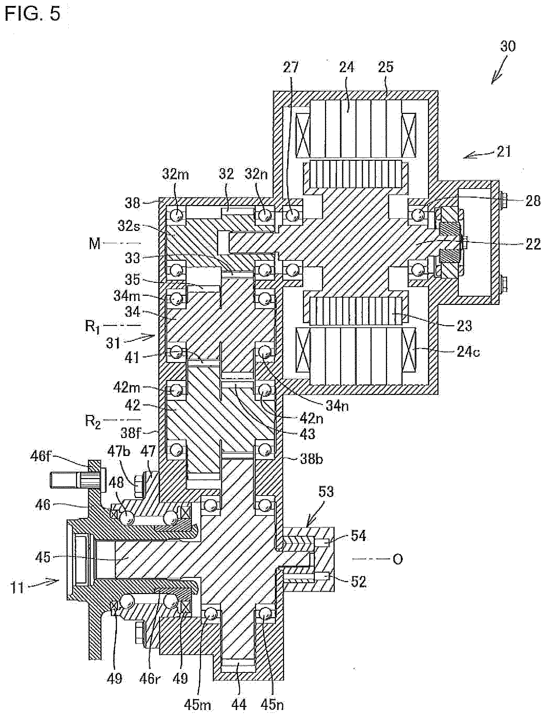

Next, there will be described a yet further embodiment of the present invention. Fig. 5 is a longitudinal cross-sectional view illustrating an in-wheel motor driving device 30 according to the yet further embodiment of the present invention. In the yet further embodiment, the structures common to this yet further embodiment and the aforementioned embodiment will be designated by the same reference signs and will not be described redundantly, and only different structures will be described hereinafter. Further, in the yet further embodiment, an oil pump 53 is provided on an outer wall surface of a main body casing 38.

There will be described differences between the embodiment in Fig. 5 and the aforementioned embodiments. A wheel hub bearing portion 11 has a rotatable inner ring and a fixed outer ring, and a speed reduction portion 31 is constituted by a four-axis parallel shaft gear speed reducer which further includes an intermediate shaft 42.

As illustrated in Fig. 5, the wheel hub bearing portion 11 includes an inner ring 46 as a rotational component, an outer ring 47 as a fixed component, and plural rolling members 48 placed in an annular-shaped gap between these inner and outer rings. The outer ring 47 is provided with a flange erected on its outer peripheral surface. The outer ring flange is provided with through holes which are spaced apart from each other in the circumferential direction. The respective through holes extend in parallel with an axis line O, and bolts 47b are penetrated therethrough from their one side in the direction of the axis line O. The respective bolts 47b are screwed, at their shaft portions, into female thread holes formed in a front surface portion 38f of the main body casing 38. Thus, the outer ring 47 is coupled and secured to the front surface portion 38f. Further, the front surface portion 38f is constituted by a casing wall portion which covers one-side end of the speed reduction portion 31 in the direction of the axis line O. Further, a rear surface portion 38b is constituted by a casing wall portion which covers another-side end of the speed reduction portion 31 in the direction of the axis line O.

The inner ring 46 is constituted by a tubular-shaped member having a larger length than that of the outer ring 47 and is penetrated through a center hole in the outer ring 47. The inner ring 46 is provided with a coupling portion 46f, at its one-side end portion in the direction of the axis line O, which is protruded from the outer ring 47 to the outside of the in-wheel motor driving device 30. The coupling portion 46f is constituted by a flange and forms a coupling portion to be coaxially coupled to a brake rotor and a wheel assembly which are not illustrated. The inner ring 46 is coupled at its coupling portion 46f to the wheel assembly and is rotated integrally therewith.

The rolling members 48 in two or more rows are placed in the annular-shaped gap between the inner ring 46 and the outer ring 47. The inner ring 46 forms an inner raceway ring for the rolling members 48 in the first row, in its outer peripheral surface in its one side in the direction of the axis line O. An inner raceway ring 46r is fitted to the outer periphery of the inner ring 46 in its other-side end portion in the direction of the axis line O, and the inner raceway ring 46r forms, in its outer peripheral surface, an inner raceway ring for the rolling members 48 in the second row. Sealing members 49 are further interposed in the annular-shaped gap between the inner ring 46 and the outer ring 47. The sealing members 49 seal the opposite ends of the annular-shaped gap, in order to prevent intrusion of dusts and foreign substances thereinto. An output shaft 45 in the speed reduction portion 31 is inserted in a center hole in the other-side end of the inner ring 46 in the direction of the axis line O and is spline-fitted thereto.

The intermediate shaft 42 in the speed reduction portion 31 extends in parallel with the axis line O. The intermediate shaft 42 is rotatably supported, at its opposite ends, on the front-surface portion 38f and the rear-surface portion 38b in the main body casing 38, with bearings 42m and 42n interposed therebetween. The intermediate shaft 42 is coaxially provided, in its middle portion, with a third intermediate gear 41 and a fourth intermediate gear 43. The third intermediate gear 41 and the fourth intermediate gear 43 are constituted by helical gears with external teeth, and the third intermediate gear 41 has a larger diameter than that of the fourth intermediate gear 43.

A second intermediate gear 35 with a relatively-smaller diameter is engaged with the third intermediate gear 41 with a relatively-larger diameter. The fourth intermediate gear 43 with a relatively-smaller diameter is engaged with an output gear 44 with a relatively-larger diameter. The output gear 44 is constituted by an external gear provided coaxially on the output shaft 45 and is constituted by a helical gear. The output gear 45 is rotatably supported on the front surface portion 38f in the main body casing 38 with a rolling bearing 45m interposed therebetween, at its one side in the direction of the axis line O, with respect to the output gear 44. Further, the output gear 45 is rotatably supported on the rear surface portion 38b in the main body casing 38 with a rolling bearing 45n interposed therebetween, at its other side in the direction of the axis line O, with respect to the output gear 44.

The output shaft 45 is penetrated through the rear surface portion 38b to extend and is coupled to the oil pump 53, at its other-side end portion in the direction of the axis line O. The oil pump 53 is mounted on the outer wall surface of the rear surface portion 38b and is protruded from the outer wall surface of the rear surface portion 38b.

According to the embodiment illustrated in Fig. 5, the oil pump 53 is placed coaxially with the axis line O of the wheel hub bearing portion 11 and is driven by the output shaft 45. This enables driving the oil pump 45 at the same rotating speed as that of the wheel assembly. Accordingly, the oil pump 53 is rotated at lower speeds, which prevents occurrences of problems of vibrations, thereby improving the durability.

Further, according to the embodiment illustrated in Fig. 5, the fixed ring is constituted by the outer ring 47, and the rotatable ring is constituted by the inner ring 46 placed in the center hole in the outer ring 47. Thus, the present invention can be realized either by the wheel hub bearing portion 11 adapted to rotate the outer ring while fixing the inner ring which is illustrated in Figs. 1 and 4, or by the wheel hub bearing portion 11 adapted to rotate the inner ring while fixing the outer ring which is illustrated in Fig. 5.

Further, according to the embodiment illustrated in Fig. 5, the oil pump 53 is coupled to the end portion of the output shaft 45. This enables placing the oil pump 53 adjacent to the elongated thin output shaft 45. This can increase the degree of freedom of the layout of the oil pump 53. For example, the oil pump 53 can be disposed in such a way as to protrude from the rear surface portion 38b of the casing 38. Also, the outer diameter size of the oil pump 53 can be made smaller than in conventional structures, by making it closer to the outer diameter size of the output shaft 45. Also, as an example of modification which is not illustrated, the oil pump can be engaged with the outer peripheral surface of the output shaft 45.

Although the embodiments of the present invention have been described with reference to the drawings, the present invention is not limited to the embodiments illustrated in the drawings. Various modifications and changes can be made to the embodiments illustrated in the drawings, within the same scope as that of the present invention or within the range of equivalents thereof.

### Industrial Applicability

The in-wheel motor driving device according to the present invention can be advantageously employed in electric automobiles and hybrid vehicles.

### Reference Signs List

- 10, 20, 30: In-wheel motor driving device
- 11: Wheel hub bearing portion
- 12: Outer ring
- 12f: Coupling portion
- 12s: Spline groove
- 13: Inner fixed member
- 14: Rolling member
- 15: Fixed shaft
- 16: Inner race
- 21: Motor portion
- 22: Motor rotational shaft
- 23: Rotor
- 24: Stator
- 24c: Stator coil
- 25: Motor casing
- 25w: Partition wall
- 31: Speed reduction portion
- 32: Input gear
- 32s: Shaft portion
- 33: First intermediate gear
- 34: Intermediate shaft
- 35: Second intermediate gear
- 36: Output gear
- 36c: Tubular portion
- 36d: Concave portion
- 38: Main body casing
- 51: Oil reservoir
- 52: Suction oil passage
- 53: Oil pump
- 53h: Room
- 53j: Outer rotor
- 53k: Inner rotor
- 53l: Center hole
- 54: Discharge oil passage
- 55: Input-shaft oil passage
- 56: Rotor oil passage
- 57: Through hole
- 58: Intermediate-shaft oil passage
- 59: Stator oil passage
- 59n: Nozzle
- 101: Carrier
- 102: Brake rotor
- 103c: Circle
- 104: Wheel assembly
- 105: Vehicle wheel
- 106: Tire
- 115, 116: Suspension member
- O, R, M: Axis line

## Claims

1. An in-wheel motor driving device comprising:
a wheel hub bearing portion including a rotatable ring adapted to rotate integrally with a wheel assembly, a fixed ring placed coaxially with the rotatable ring, and a plurality of rolling members placed in an annular-shaped gap between the rotatable ring and the fixed ring;
a motor portion adapted to drive the rotatable ring;
a speed reduction portion including an output shaft coaxially coupled to the rotatable ring, and an input gear coupled to a motor rotational shaft in the motor portion, the speed reduction portion being adapted to reduce a speed of a rotation of the motor rotational shaft and to transmit the rotation to the rotatable ring; and
an oil pump placed coaxially with the wheel hub bearing portion and adapted to be driven by the output shaft.

2. The in-wheel motor driving device according to claim 1, wherein
the rotatable ring comprises an outer ring, and the fixed ring comprises an inner ring placed in a center hole in the outer ring, and
the oil pump is provided on an outer periphery of the outer ring.

3. The in-wheel motor driving device according to claim 2, wherein
the outer ring includes a coupling portion to be coupled to the wheel assembly at its one side in a direction of an axis line, and
the oil pump is placed between the coupling portion and an output gear.

4. The in-wheel motor driving device according to claim 2, wherein
the outer ring includes a coupling portion to be coupled to the wheel assembly at its one side in a direction of an axis line, and
the oil pump is placed in an other side in the direction of the axis line, which is an opposite side from the coupling portion with respect to the output gear.

5. The in-wheel motor driving device according to any of claims 2 to 4, wherein
the oil pump includes an inner rotor and an outer rotor, and
the inner rotor is engaged, at its inner peripheral surface, with an outer peripheral surface of the outer ring.

6. The in-wheel motor driving device according to any of claims 2 to 5, wherein
the output gear is coaxially provided, in its end surface, with a concave portion with an annular shape, and
the oil pump is provided in the concave portion.

7. The in-wheel motor driving device according to claim 5, wherein
the outer ring is provided, in its outer peripheral surface, with a spline groove with a constant outer diameter from its one side in the direction of the axis line to its other side in the direction of the axis line, and
an inner peripheral surface of the output gear and the inner peripheral surface of the inner rotor are fitted to the spline groove.

8. The in-wheel motor driving device according to claim 1, wherein
the fixed ring comprises an outer ring, and the rotatable ring comprises an inner ring placed in a center hole in the outer ring.

9. The in-wheel motor driving device according to claim 1 or 8, wherein
the oil pump is engaged with or coupled to the output shaft.
